# EUROPÄISCHE PATENTSCHRIFT

(11) **EP 1 728 112 B1**
(45) Veröffentlichungstag und Bekanntmachung des Hinweises auf die Patenterteilung: **15.12.2010**
(21) Anmeldenummer: 05706955.1
(22) Anmeldetag: 21.01.2005
(51) Int. Cl.: G02B 6/42

(54) **OPTISCHER VERBINDER**
OPTICAL CONNECTOR
CONNECTEUR OPTIQUE

(30) Priorität: 27.01.2004 DE 102004004240
(43) Veröffentlichungstag der Anmeldung: 06.12.2006
(73) Patentinhaber: MOLEX INCORPORATED, Lisle, Illinois 60532 (US)
(72) Erfinder: SCHEMPP, Otto, 74906 Bad Rappenau (DE); GERNER, Mathias, 63179 Obertshausen (DE)
(74) Vertreter: Mergel, Volker
(86) Internationale Anmeldenummer: PCT/EP2005/000590
(87) Internationale Veröffentlichungsnummer: WO 2005/071458

(56) Entgegenhaltungen:
- EP-A- 1 170 609
- GB-A- 2 239 104
- PATENT ABSTRACTS OF JAPAN Bd. 013, Nr. 440 (P-940), 4. Oktober 1989 (1989-10-04) & JP 01 169416 A (HITACHI LTD), 4. Juli 1989 (1989-07-04)

## Beschreibung

### Gebiet der Erfindung

Die Erfindung betrifft einen optischen Verbinder zum Verbinden von Kunststofffasern im Allgemeinen und zum Herstellen von Multimedia-Verbindungen in Kraftfahrzeugen, z.B. gemäß dem MOST^{®}-Standard im Speziellen.

### Hintergrund der Erfindung

Aufgrund der zunehmenden Komplexität von Anwendungen im Bereich der informativen Kraftfahrzeugelektronik, welche inzwischen als multimedial bezeichnet werden kann, sind neue Konzepte für die Vernetzung verschiedener Geräte notwendig geworden.

Z.B. sollen zumindest Autoradio, Mobiltelefon und Navigationssystem bidirektional miteinander kommunizieren können, so dass z.B. die Musikwiedergabe des Autoradios stumm geschaltet und die Mobilfunkverbindung über die Radiolautsprecher betrieben werden, wenn der Benutzer telefonieren möchte. Es ist jedoch ersichtlich, dass dies nur ein sehr einfacher Anwendungsfall ist und dass der multimedialen Vernetzung der Bordelektronik kaum Grenzen gesetzt sind, um die Ansprüche der Kunden zu befriedigen.

Um diesen komplexen Anforderungen gerecht zu werden, hat sich für diese Verbindungen im Automobilbereich die optische Datenübertragung durchgesetzt. Diesbezüglich ist eigens ein neuer Standard namens MOST^{®} entwickelt worden. Die Spezifikationen des MOST^{®}-Standards sind unter anderem als "MAMAC Specification" Rev 1.0, 11/2002, Version 1.0-00 unter http://www.mostnet.de/downloads/Specifications/MAMACSpecification_1V0-00.pdf und unter http://www.mostnet.de/downloads/Specifications/MOST%20Physical%20Layer%20Specification/010223 WgPhy Drawings.zip veröffentlicht. Auf die dem MOST^{®}-Standard zugrunde liegenden Spezifikationen wird hiermit Bezug genommen und deren Inhalt durch Referenz vollumfänglich zum Gegenstand dieser Offenbarung gemacht.

Eine kompakte Sorte von optischen MOST^{®}-Verbindern umfasst elektro-optische Wandler, welche rückseitig an dem Verbinder befestigt sind. Diese Verbinder enthalten kurze Wellenleiterabschnitte, welche typischerweise eingeklebt sind.

Diese Verbinder sind in vielerlei Hinsicht nachteilig, da die Wellenleiterabschnitte sehr klein sind und sich daher der Klebstoffauftrag relativ schwierig gestaltet. Hierbei besteht insbesondere die Gefahr des Verkleckerns der empfindlichen optischen Endflächen des Wellenleiters, was die Qualität des Verbinders bis zu dessen vollständiger Unbrauchbarkeit verschlechtern kann.

Ferner muss die longitudinale Positionierung des Wellenleiterabschnitts in dem Verbinder mit hoher Maßhaltigkeit erfolgen, was beim Kleben ebenfalls schwierig zu erreichen ist.

Darüber hinaus erfordert der Klebstoffauftrag eine komplexe Maschine und das Aushärten des Klebstoffes dauert relativ lange, so dass die Verbinder unverhältnismäßig teuer sind und die Fertigung in großen Massen Schwierigkeiten bereitet.

Ein Verbinder ohne Klebstoffauftrag ist aus der EP 1 170 609 A2 bekannt und weist ein Anschlusselement mit einem hohlzylindrischen Halter für eine Hülse auf, in der sich ein Wellenleiter erstreckt. Der hohlzylindrische Halter besitzt in seinem Inneren drei sich längs erstreckende Rippen im Winkelabstand von 120°, um die Hülse festzuklemmen, wenn diese von der Seite der optischen Element-Module in den hohlzylindrischen Haltern geschoben wird, bis das vordere Ende des Wellenleiters und die Hülse mit den vorderseitigen Kanten der Rippen fluchten. Eine gesonderte Anschlagsfläche für das komplementäre Anschlusselement des Gegenverbinders ist im hohlzylindrischen Halter nicht vorgesehen, um gegebenenfalls einen gewissen, geringen Abstand zwischen dem vorderen Ende des Wellenleiters des Verbinders und desjenigen des Gegenverbinders einhalten zu können.

Es sind auch Verbinder bekannt, bei welchen der Wellenleiterabschnitt geklemmt wird. Hierbei sind Klemmspitzen typischerweise direkt an der optischen Kontaktfläche des Wellenleiterabschnitts angeordnet.

Es hat sich nun herausgestellt, dass bei dieser Art der Klemmung an der optischen Kontaktfläche des Wellenleiterabschnitts Ausbeulungen entstehen, welche in verschiedener Hinsicht nachteilig sein können.

Zunächst besteht die Gefahr, dass die optische Kontaktfläche des Wellenleiters derart verformt wird, dass die Übertragungseigenschaften negativ beeinflusst werden. Insbesondere können hierdurch unerwünschte Reflexionen an der optischen Grenzfläche entstehen.

Ferner ist die Höhe der Ausbeulungen undefiniert, wodurch eine exakte longitudinale Positionierung des Wellenleiters in dem Verbinder zumindest erschwert wird.

Darüber hinaus besteht bei den bekannten Klemmspitzen, insbesondere aufgrund ihrer Form die Gefahr einer Verletzung des Wellenleiters, was im ungünstigsten Fall bis zu einer völligen Unbrauchbarkeit des Verbinders führen kann.

Alles in allem sind die bekannten Lösungen stark verbesserungsbedürftig. Andererseits genügen in diesem hart umkämpften Markt häufig bereits geringfügig erscheinende qualitative und/oder kostenmäßige Vorteile, um einen entscheidenden Wettbewerbsvorsprung am Markt zu erzielen.

### Allgemeine Beschreibung der Erfindung

Die Erfindung hat sich daher die Aufgabe gestellt, einen optischen Verbinder bereit zu stellen, welcher einfach, schnell und kostengünstig herzustellen ist.

Eine weitere Aufgabe der Erfindung ist es, einen optischen Verbinder bereit zu stellen, welcher eine optische Verbindung von hoher Qualität, insbesondere mit einer geringen Dämpfung und Reflektivität gewährleistet.

Noch eine Aufgabe der Erfindung ist es, einen mechanisch präzisen und standhaften optischen Verbinder bereit zu stellen.

Noch eine weitere Aufgabe der Erfindung ist es, einen optischen Verbinder bereit zu stellen, welcher die Nachteile bekannter Verbinder vermeidet oder zumindest mindert.

Die Aufgabe der Erfindung wird in überraschend einfacher Weise bereits durch den Gegenstand der unabhängigen Ansprüche gelöst. Vorteilhafte Weiterbildungen der Erfindung sind in den Unteransprüchen definiert.

Erfindungsgemäß wird ein optischer Verbinder, insbesondere für Kunststofflichtwellenleiter, genauer für optische Kunstofffasern (plastic optical fiber, POF) und insbesondere zum Herstellen von Multimedia-Verbindungen in einem Kraftfahrzeug gemäß dem MOST^{®}-Standard bereit gestellt.

Der Verbinder umfasst zunächst ein vorzugsweise dielektrisches Verbindergehäuse, z.B. aus Kunststoff mit einer Gegenverbinderaufnahme zum paarenden Verbinden mit einem entsprechend komplementären Gegenverbinder.

Der Verbinder umfasst ferner zumindest einen kurzen optischen Faserabschnitt oder Lichtwellenleiterabschnitt, welcher eine optische Achse des Verbinders definiert und an seinen beiden abschließenden Enden eine vordere und hintere optische Anschlussfläche aufweist. Hierbei bezeichnet "vorne" diejenige Seite, welche im gepaarten Zustand dem Gegenverbinder zugewandt ist und umgekehrt.

Weiter umfasst der Verbinder zumindest ein optisches Anschlusselement, z.B. eine im Wesentlichen zylindrische Anschlusshülse, zum paarenden Verbinden mit einem komplementären optischen Anschlusselement des Gegenverbinders. Ferner weist die Anschlusshülse zumindest einen Abschnitt auf, welcher als Faseraufnahmehülse ausgebildet ist. In der Faseraufnahmehülse ist der optische Faserabschnitt angeordnet, um mit seiner vorderen optischen Anschlussfläche eine optische Verbindung mit einer optischen Faser des Gegenverbinders herzustellen, wenn der Verbinder und der Gegenverbinder verbunden sind.

Vorzugsweise ist der Verbinder zumindest ein optischer Doppelverbinder mit zwei identischen optischen Anschlüssen. Der optische Verbinder kann im übrigen auch zusätzlich elektrische Anschlüsse enthalten, so dass ein sogenannter Hybrid-Verbinder gebildet wird.

Der optische Faserabschnitt ist weiter unmittelbar, insbesondere ferrulenlos, in den Faserkanal eingepresst und mittels einer Klemmung mit einer Mehrzahl von Klemmelementen in der Faseraufnahmehülse bzw. in dem Faserkanal dauerhaft festgelegt, so dass insbesondere auf eine zusätzliche Verklebung verzichtet werden kann.

Die Erfindung zeichnet sich weiter dadurch aus, dass die Faseraufnahmehülse an der oder im Bereich der vorderen optischen Anschlussfläche des optischen Faserabschnitts eine Vorderseite aufweist und die Klemmelemente longitudinal, d.h. entlang der optischen Achse von der Vorderseite der Faseraufnahmehülse beabstandet sind.

Insbesondere ist die Vorderseite der Faseraufnahmehülse in unmittelbarer Nähe der vorderen optischen Anschlussfläche des optischen Faserabschnitts, z.B. longitudinal zwischen 0 µm und 50 µm entfernt, angeordnet und als eine vordere Anschlagsfläche ausgebildet, welche unter anderem einen Anschlag für das komplementäre Anschlusselement des Gegenverbinders bildet. Mit anderen Worten umgibt ein der Anschlagsfläche rückwärtig unmittelbar benachbarter Abschnitt der Faseraufnahmehülse die vordere optische Anschlussfläche.

Bevorzugt sind die oder ist die Vorderseite der Klemmelemente in Bezug auf die Vorderseite der Faseraufnahmehülse um mehr als 0 µm und um weniger als 5 mm, besonders bevorzugt um 100 µm oder 200 µm bis 3 mm zurückgesetzt.

Klemmen hat zunächst gegenüber Kleben den Vorteil, dass es sauberer, einfacher und schneller durchzuführen ist.

Die erfindungsgemäße Anordnung der Klemmelemente mag zunächst nachteilig erscheinen, da der Abschnitt des Faserabschnitts zwischen der vorderen optischen Anschlussfläche und den Klemmelementen nicht geklemmt ist. Daher könnte zunächst der Eindruck entstehen, dass eine ungenügende Führung oder aufgrund der Elastizität der Kunststofffaser eine ungenaue longitudinale Positionierung die Folge wäre.

Versuche mit dem erfindungsgemäßen Verbinder haben jedoch gezeigt, dass dies mitnichten, sondern überraschenderweise sogar das Gegenteil der Fall ist.

Typischerweise wird nämlich zur Montage des Verbinders der Faserabschnitt von hinten unmittelbar in die Faseraufnahmehülse eingepresst, wobei von vorne ein Montagestempel in den Verbinder, genauer in das Anschlusselement eingeführt und gegen die Anschlagfläche gedrückt wird. Der Montagestempel, genauer seine rückwärts gewandte Stirnfläche bildet dann wiederum einen Anschlag für den Faserabschnitt.

Beim nachfolgenden Einpressen des Faserabschnitts wird dieser mit seiner vorderen optischen Anschlussfläche von hinten longitudinal über die Klemmelemente hinaus in die Faseraufnahmehülse bis gegen die rückwärts gewandte Stirnfläche des Montagestempels eingeschoben.

Der Faserabschnitt lässt sich dabei entgegen der unbefangenen Erwartung beim Einpressen longitudinal sogar sehr präzise positionieren. Denn anders als beim Stand der Technik weist die Form der Anschlussfläche keine oder kaum undefinierte Ausbeulungen auf, sondern ist genau definiert und bildet somit beim Einpressen einen präziseren Anschlag für den Montagestempel. Die vorbestimmte Form der vorderen Anschlussfläche des noch nicht eingepressten Faserabschnitts bleibt nämlich durch die beim Einpressen von den Klemmelementen verursachte Quetschung des Faserabschnitts im Wesentlichen unbeeinflusst, z.B. eben oder konkav gewölbt. Der relativ kurze longitudinal nicht unmittelbar befestigte Abschnitt vor den Rastelementen fällt diesbezüglich nicht nennenswert negativ ins Gewicht.

Im Gegenteil kann die gut bekannte Elastizität des Faserabschnitts sogar dazu eingesetzt werden, einen genau definierten Rückstand gegenüber der Anschlagsfläche der Faseraufnahmehülse gemäß dem MOST^{®}-Standard zu erzeugen. Dieser Standard verlangt nämlich einen Rückstand von 0 µm bis 50 µm des Faserabschnitts gegenüber der Anschlagsfläche. Diese Toleranz kann mit der Erfindung gut eingehalten werden.

Hierzu wird zunächst der Faserabschnitt mit einer vorbestimmten Kraftbeaufschlagung gegen den Montagestempel gepresst und federt in seinem vorderen Bereich nach Wegfall der Kraftbeaufschlagung definiert etwas zurück und/oder bei Entfernung des Montagestempels noch etwas vor. Dieses Nachfedern kann aber präzise in das Design des Montagestempels und die Auswahl der Presskraft einbezogen werden.

Der erfindungsgemäße Verbinder hat, da die Klemmelemente auch in Bezug auf die vordere optische Anschlussfläche des Faserabschnitts zurückgesetzt sind, noch einen weiteren Vorteil.

Durch die geringe Verquetschung der vorderen Anschlussfläche können auch Dämpfung und Reflexion an der Anschlussfläche gegenüber Verbindern, bei welchen Spitzen unmittelbar an der vorderen Anschlussfläche angeordnet sind, verringert werden.

Insgesamt setzt sich der Verbinder aus relativ wenigen Einzelteilen zusammen und die Herstellung ist vereinfacht. Gemäß einer bevorzugten Ausführungsform der Erfindung definiert die Faseraufnahmehülse einen im wesentlichen zylindrischen Faserkanal, in welchem der optische Faserabschnitt festgelegt ist und die Rastelemente springen aus dem inneren Umfang der Faseraufnahmehülse oder Führungshülse radial nach innen in den Faserkanal vor.

Besonders einfach ist es, die Klemmelemente, die Faseraufnahmehülse, das Anschlusselement und/oder das Verbindergehäuse einstückig miteinander auszubilden, so dass der kurze Faserabschnitt unmittelbar in das Verbindergehäuse eingepresst ist.

Vorzugsweise greifen die Klemmelemente in den äußeren Umfang des optischen Faserabschnitts, genauer in den Mantel des Faserabschnitts, insbesondere materialverdrängend quetschend ein. In vorteilhafter Weise wird der Kern der Faser hierbei nicht verletzt.

Gemäß einer bevorzugten Ausführungsform der Erfindung weist die Faseraufnahmehülse einen vorderen und einen hinteren Abschnitt oder einen Führungsabschnitt bzw. einen Einführabschnitt auf, welche longitudinal voneinander beabstandet und benachbart sind und wobei die Innendurchmesser der beiden Abschnitte unterschiedlich groß sind. Insbesondere ist der Innendurchmesser des hinteren Abschnitts größer als der Innendurchmesser des vorderen Abschnitts ausgebildet.

In vorteilhafter Weise wird dadurch einerseits der Faserabschnitt im vorderen Bereich oder im Bereich seiner vorderen Anschlussfläche genau geführt, so dass eine hohe Koaxialität zwischen den zu verbindenden Fasern bzw. Faserabschnitten erzielt werden kann. Andererseits lässt sich der Faserabschnitt über einen weiten Bereich, nämlich bis der engere Führungsabschnitt erreicht ist, leicht einführen.

Vorzugsweise kann zwischen dem vorderen und hinteren Abschnitt eine Fasung oder ein sich nach vorne verjüngender Zwischenabschnitt vorgesehen sein. Dies erleichtert das Einführen des Faserabschnitts zusätzlich.

Erfindungsgemäß hat sich herausgestellt, dass der vordere Abschnitt oder Führungsabschnitt einen Innendurchmesser aufweist, welcher zwischen 40 µm kleiner und 120 µm größer, besonders bevorzugt zwischen 20 µm kleiner und 60 µm größer, als der Außendurchmesser des optischen Faserabschnitts gewählt werden sollte. Der Innendurchmesser des hinteren Einführabschnittes ist bevorzugt derart bemaßt, dass dort ein radiales Spiel von 40 µm bis 100 µm, insbesondere 20 µm bis 50 µm vorhanden ist.

Diese Maße haben sich als guter Kompromiss zwischen Führungsgenauigkeit und Einführbarkeit bewährt.

Insbesondere sind die Klemmelemente in dem hinteren Einführabschnitt der Faseraufnahmehülse angeordnet und erstrecken sich longitudinal von einem rückwärtigen Ende des vorderen Führungsabschnitts bis in den hinteren Einführabschnitt. Dadurch, dass die Klemmelemente bei diesem Ausführungsbeispiel nicht in den Führungsabschnitt hinein reichen, konnte eine besonders präzise Führung erzielt werden. Diesbezüglich hat sich auch der Einsatz von zumindest drei oder vier Klemmelementen, welche in Bezug auf den Umfang gleichmäßig verteilt sind, als vorteilhaft erwiesen.

Gemäß einer besonders bevorzugten Ausform der Erfindung sind die Klemmelemente in Form von Rastnasen oder Rasthaken ausgebildet. Diese Rastnasen bzw. Rasthaken weisen in radialer Richtung, genauer in der zugehörigen Radialebene einen im Wesentlichen dreieckigen Querschnitt auf und besitzen eine in Einführrichtung des Faserabschnitts nach innen.geneigte rückseitige und insbesondere ebene Rampenfläche, um den Faserabschnitt von der Rückseite des Verbindergehäuses einzupressen und/oder eine vorderseitige Rastfläche, welche sich radial oder im Wesentlichen senkrecht zur optischen Achse des Faserabschnitts erstreckt, um den Faserabschnitt - durch den quetschenden Eingriff - vor der Rastfläche zu verrasten, wenn dieser über die Rastfläche hinaus eingeschoben wird. Insbesondere ist dabei die Rastfläche der Rastnasen gegenüber der Vorderseite der Faseraufnahmehülse longitudinal zurückgesetzt.

Mit anderen Worten weisen die Rastnasen eine rampen- oder sägezahnartige Form auf und deren vorderseitige Rastfläche verläuft vorzugsweise bündig mit dem hinteren Ende des vorderen Führungsabschnitts der Faseraufnahmehülse. Diese Ausgestaltung hat sich einfach in der Herstellung erwiesen.

Die Rastnasen weisen vorzugsweise eine sich entlang des inneren Umfangs der Faseraufnahmehülse erstreckende Breite von 50 µm bis 1 mm, bevorzugt 150 µm bis 400 µm und eine sich radial nach innen in den Faserkanal erstreckende Höhe von 20 µm bis 500 µm, bevorzugt 50 µm bis 200 µm auf.

Es hat sich gezeigt, dass dadurch eine sichere dauerhafte Klemmung des Faserabschnitts bei gleichzeitig moderater Quetschung erreicht werden konnte.

Bevorzugt ist der Verbinder ein sogenannter Kompaktverbinder, d.h. dass der oder die elektro-optischen Wandler unmittelbar an dem Verbinder oder Verbindergehäuse befestigt ist bzw. sind. Folglich umfasst der Verbinder vorzugsweise zumindest einen elektro-optischen Wandler oder Transceiver (FOT) mit einem optischen Eingang/Ausgang, wobei der Wandler an einem rückseitigen Ende des Faserkanals derart angeordnet ist, dass über die hintere optische Anschlussfläche des Faserabschnitts eine optische Verbindung zwischen dem Faserabschnitt und dem Wandler hergestellt ist. Somit kann der Wandler nun über die vordere Anschlussfläche optisch kontaktiert werden.

Beispielsweise ist der elektro-optische Wandler mit einer Klammer unmittelbar an einer Rückseite des Verbindergehäuses befestigt. Die Klammer ist bevorzugt aus Metall gestanzt und geformt, genauer im Wesentlichen U-förmig ausgebildet, und an den Seitenflächen des Verbindergehäuses verrastet. Ferner kann die Klammer mittels Lötstiften mit einem Schaltungsträger verbunden werden.

Weiter bevorzugt weist die Klammer zumindest einen elastisch federnden Abschnitt auf, welcher in einem montierten Zustand den Wandler vorwärts in Richtung der hinteren optischen Anschlussfläche des Faserabschnitts presst, jedoch insbesondere ohne diese zu berühren.

Vorzugsweise besitzt die Klammer noch eine Rückwand und einen oberseitigen Deckabschnitt, welche entlang einer hinteren oberen Kante einstückig miteinander verbunden sind. Der oberseitige Deckabschnitt liegt insbesondere von oben auf dem Verbindergehäuse auf, wodurch eine stabile Abstützung bereit gestellt ist. Der elastisch federnde Abschnitt ist ferner an dem oberseitigen Deckabschnitt aufgehängt und der elastisch federnde Abschnitt weist einen im Wesentlichen L-förmig gebogenen Querschnitt auf. Es sei hierbei erwähnt, dass die Befestigung des Wandlers auch bei anderen Verbindern eingesetzt werden kann.

Im Folgenden wird die Erfindung anhand von Ausführungsbeispielen und unter Bezugnahme auf die Zeichnungen näher erläutert, wobei gleiche und ähnliche Elemente teilweise mit gleichen Bezugszeichen versehen sind.

### Kurzbeschreibung der Figuren

Es zeigen:
- Fig. 1: eine Vorderansicht des erfindungsgemäßen Verbinders,
- Fig. 2: eine Schnittzeichnung des Verbinders aus Fig. 1 entlang der Schnittlinie A-A,
- Fig. 3: eine Ausschnittsvergrößerung des Bereiches B in Fig. 2,
- Fig. 4: eine perspektivische schräge Rückansicht eines der beiden Faseraufnahmekanäle des Verbinders,
- Fig. 5: eine perspektivische schräge Vorderansicht eines der Anschlusselemente des Verbinders,
- Fig. 6: eine Schnittzeichnung des Verbinders aus Fig. 1 entlang der Schnittlinie C-C mit eingepressten Faserabschnitten,
- Fig. 7: eine Ausschnittsvergrößerung des Bereiches D aus Fig. 6,
- Fig. 8: eine perspektivische Ansicht des Verbinders von schräg hinten unten,
- Fig. 9: eine perspektivische Ansicht wie Fig. 8 mit elektro-optischen Wandlern und Befestigungsklammer,
- Fig. 10: wie Fig. 9 mit verrasteter Befestigungsklammer und
- Fig. 11: eine Schnittzeichnung entsprechend Fig. 6 mit elektro-optischen Wandlern und verrasteter Befestigungsklammer.

### Detaillierte Beschreibung der Erfindung

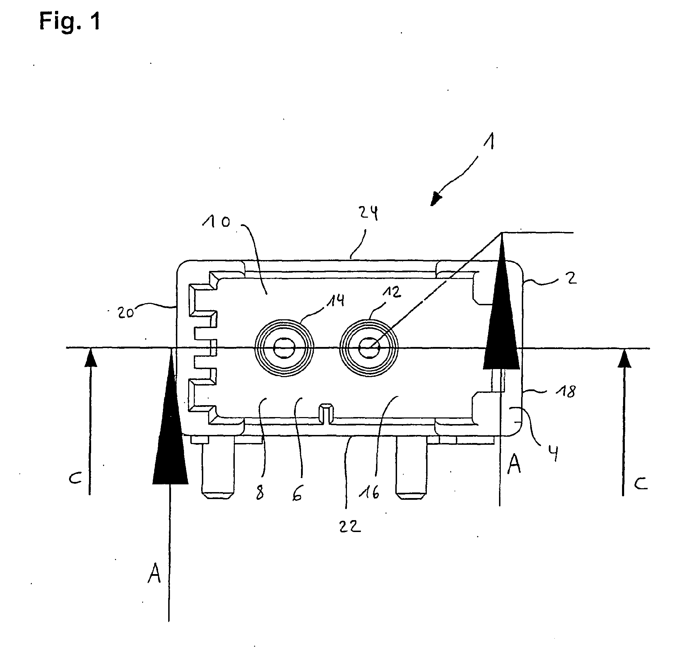

### Fig. 1 zeigt den Verbinder 1 mit einem

Kunststoffverbindergehäuse 2, welches in seiner Vorderseite 4 eine Öffnung 6 aufweist. Die Öffnung 6 gibt den Weg frei in einen Hohlraum 8 in dem Verbindergehäuse 2, wodurch eine Aufnahme 10 zum paarenden Verbinden mit einem Gegenverbinder (nicht dargestellt) gebildet wird.

In dem Hohlraum 6 sind zwei optische Anschlusselemente 12, 14 in Form von zylindrischen Anschlusshülsen angeordnet, welche einstückig mit dem Verbindergehäuse 2 ausgebildet sind.

Das Verbindergehäuse 2 wird von der Vorderseite 4, einer Rückseite 16, zwei Seitenflächen 18, 20 sowie einem Boden 22 und einem Deckel 24 einstückig gebildet.

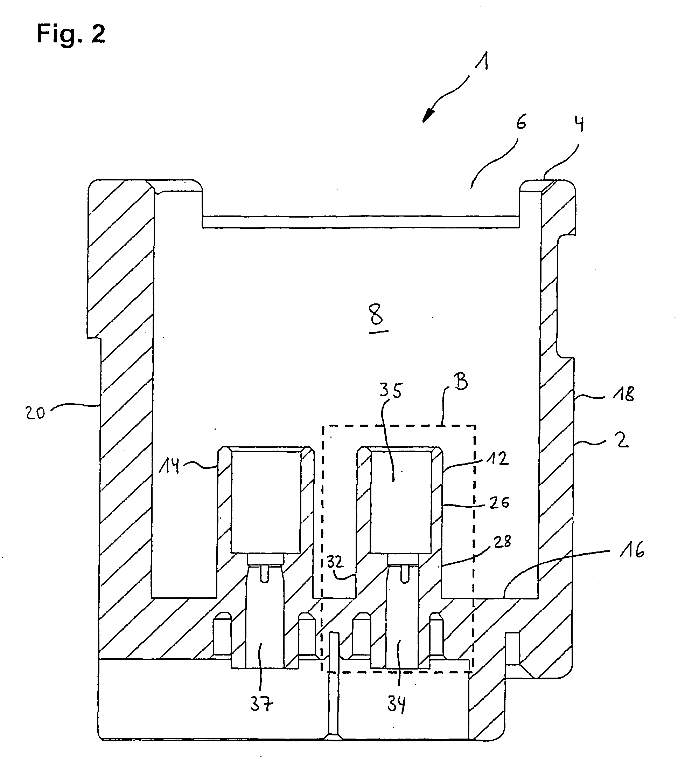

Bezug nehmend auf Fig. 2 ist in einem Querschnitt durch das Verbindergehäuse 2 dargestellt, dass sich der Hohlraum 8 von der Vorderseite 4 bis zu der Rückseite 16 des Verbindergehäuses 2 erstreckt. Von der Rückseite 16 ragen ferner die beiden Anschlusshülsen 12, 14 in den Hohlraum 8 hinein.

Zum Verbinden wird ein Abschnitt des Gegenverbinders durch die Öffnung in den Hohlraum 8 eingesteckt.

Da die beiden Anschlusshülsen 12, 14 im Wesentlichen identisch ausgebildet sind, wird im Folgenden stellvertretend für beiden Anschlusshülsen lediglich auf die in Fig. 2 rechts dargestellte Anschlusshülse 12 Bezug genommen.

Die Anschlusshülse 12 weist einen hohlzylindrischen vorderen Anschlussabschnitt 26 und eine Faseraufnahmehülse oder Führungshülse 32 auf, wobei der Anschlussabschnitt 26 und die Führungshülse 32 miteinander und mit dem Verbindergehäuse 2 einstückig ausgebildet sind. Ferner weist die Führungshülse 32 einen vorderen in den Hohlraum 8 hineinragenden, im Wesentlichen hohlzylindrischen Bereich 28 auf. Die Führungshülse 32 definiert in ihrem Zentrum einen koaxialen im Wesentlichen zylindrischen Hohlraum, welcher einen Faserkanal 34 definiert.

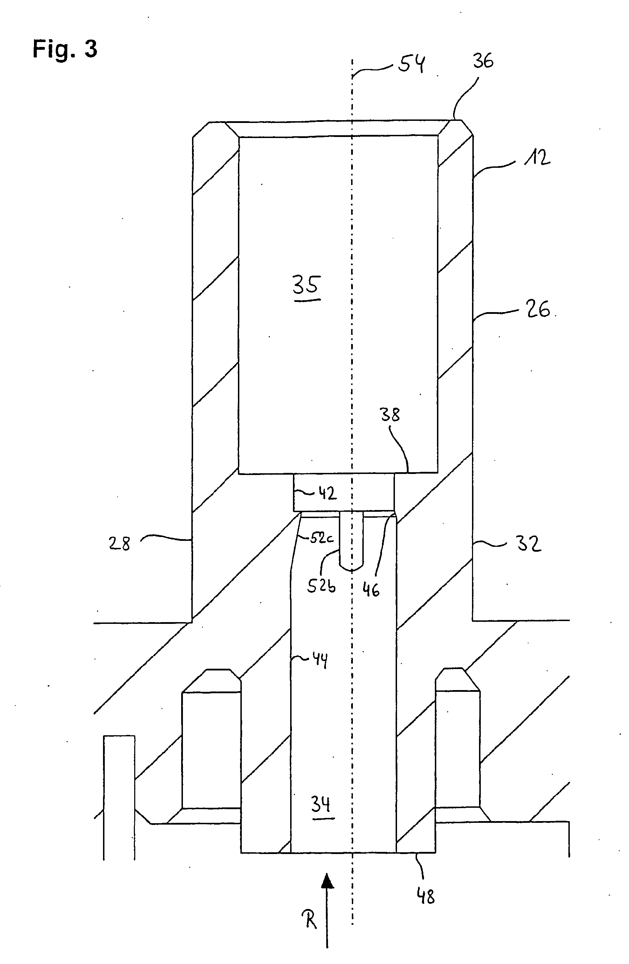

Bezug nehmend auf Fig. 3, in welcher die Anschlusshülse 12 im Detail dargestellt ist, ist zu sehen, dass der Anschlussabschnitt 26 eine zylindrische Kavität 35 zur Aufnahme eines komplementären Anschlusselements (nicht dargestellt), welches in die Kavität 35 einführbar ist, aufweist. Die Kavität 35 erstreckt sich von einer Vorderseite 36 der Anschlusshülse 12 bis zu einer rückwärtigen Anschlagsfläche 38, welche als Anschlag für den Gegenverbinder dient.

Die Führungshülse 32, welche sich rückseitig unmittelbar an den Anschlussabschnitt 26 bzw. die Kavität 35 anschließt und dabei an die rückseitige Anschlagsfläche 38 unmittelbar angrenzt, umfasst einen Führungsabschnitt 42, einen Einführabschnitt 44 und eine dazwischen liegende Fasung oder einen sich ein verjüngenden Bereich 46.

Ferner ist die Führungshülse 32 an ihrer Rückseite 48 offen, so dass von hinten in Einführrichtung R ein kurzer Lichtwellenleiter- oder Faserabschnitt eingeführt werden kann.

Weiter ist in Fig. 3 ein erstes Klemmelement in Form einer Rastnase 52b in der Draufsicht sowie eine zweite Rastnase 52c im radialen Querschnitt in Bezug auf die optische Achse 54 dargestellt. Die beiden übrigen Rastnasen 52a, 52d der vier rotationssymmetrisch angeordneten Rastnasen 52a-52d sind in der Darstellung in Fig. 3 nicht zu sehen.

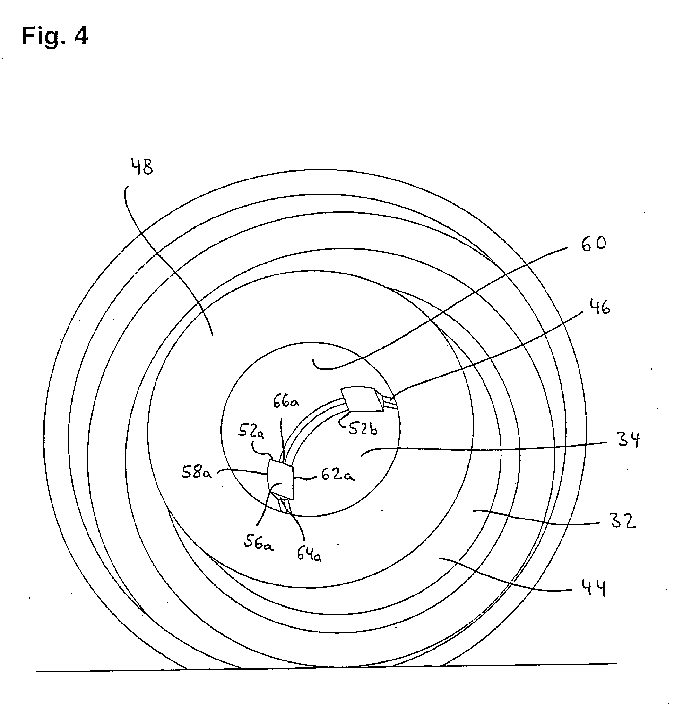

Bezug nehmend auf Fig. 4 ist ein perspektivischer rückwärtiger Einblick in den Faserkanal 34 von der Rückseite 48 der Führungshülse 32 gezeigt. In dieser Darstellung ist die rampenartige Form der Rastnasen 52a und 52b am besten zu erkennen.

Die Rastnasen 52a-52d ragen in der Nähe des dem Einführende 48 der Führungshülse 32 gegenüberliegenden Ende 39 nach innen in den Faserkanal 34.

Stellvertretend für alle Rastnasen 52a-52d weist die Rastnase 52a eine in Einführrichtung R nach innen geneigte rückwärtige ebene Aufschubfläche 56a auf, welche sich zwischen einer gewölbten Verbindungslinie 58a mit dem inneren Umfang 60 der Führungshülse 32 und einer vorderen geraden Verbindungskante 62a erstreckt. Ferner wird die Rastnase 52a von zwei dreieckigen Seitenflächen 64a, 66a begrenzt.

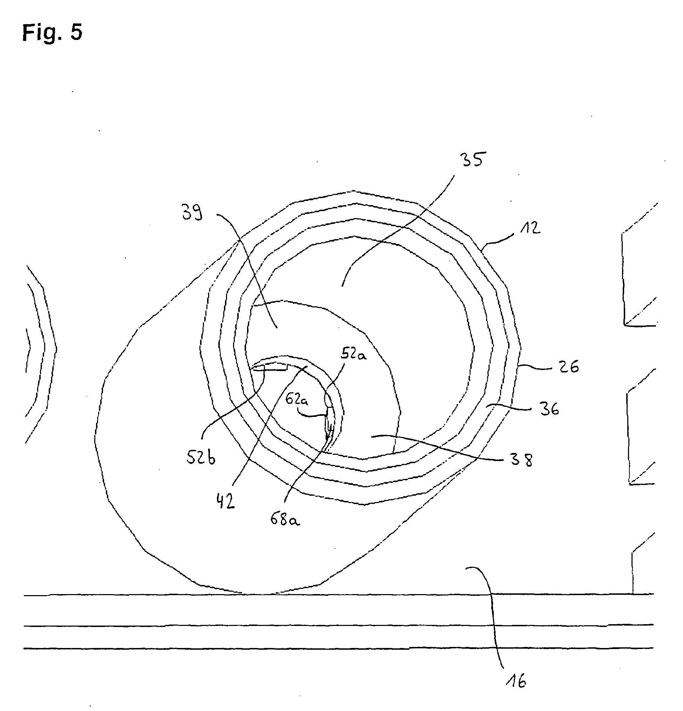

Bezug nehmend auf Fig. 5 ist der Anschlussabschnitt 26 mit seiner Vorderseite 36 und dem rückseitigen Anschlag 38 zu erkennen.

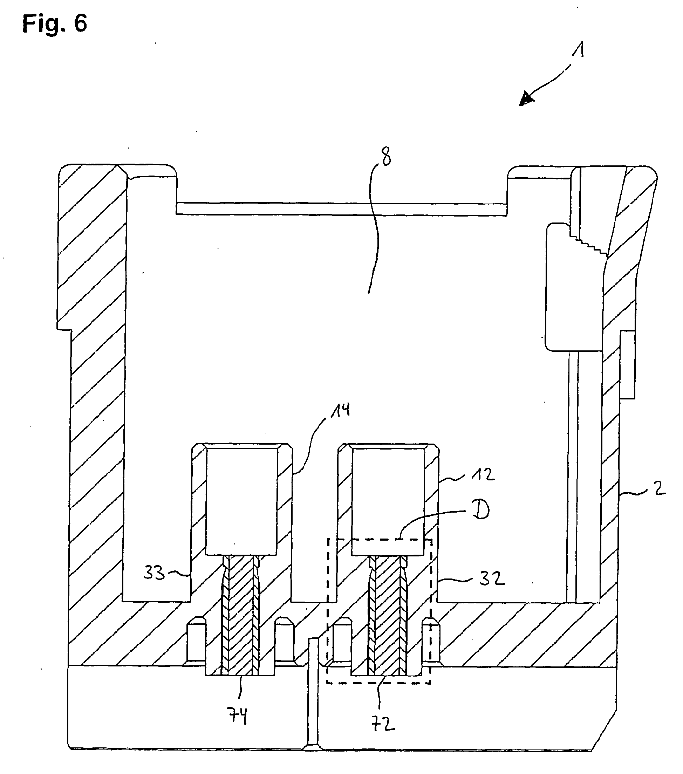

Ferner ist die vordere Rastfläche 68a der Rastnase 52a zu sehen, welche sich senkrecht vom inneren Umfang 60 des Einführabschnitts 44 bis zu der Verbindungskante 62a erstreckt. Bezug nehmend auf Fig. 6 ist der Verbinder 1 mit zwei unmittelbar in das Verbindergehäuse 2 bzw. in die Führungshülsen 32, 33 von hinten bzw. von der Seite der elektro-optischen Wandler eingepressten Faserabschnitten 72, 74 dargestellt.

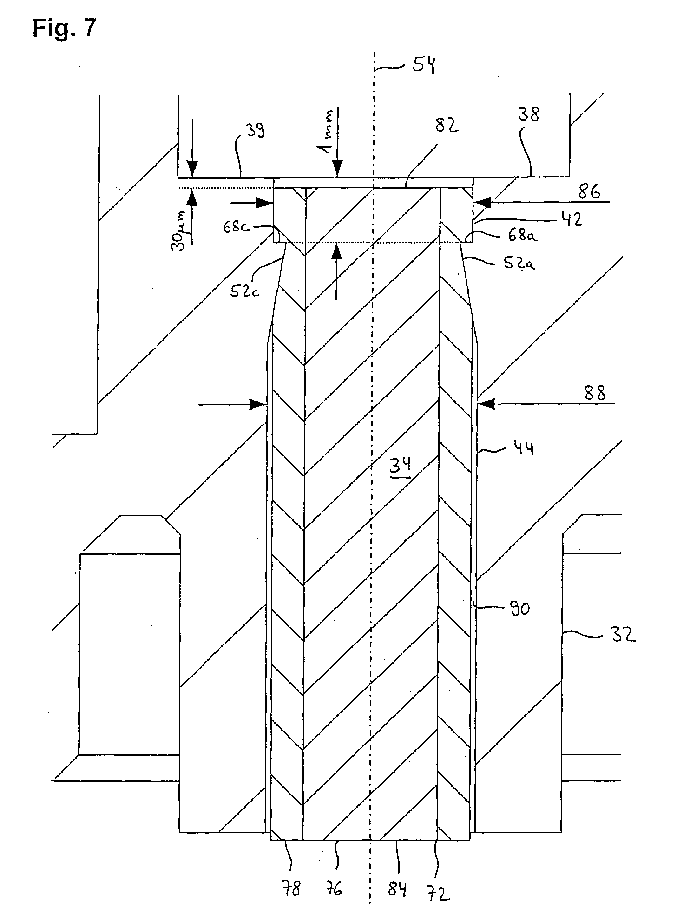

Bezug nehmend auf Fig. 7 ist stellvertretend für beide Anschlusselemente 12, 14 die Einpressung des Faserabschnitts 72 in die Führungshülse 32 im Folgenden erläutert.

Der Faserabschnitt 72 besteht aus einem Lichtwellenleitenden Kunststoffkern 76 und einem diesen umschließenden Mantel 78. Der Faserabschnitt 72 weist ferner eine vordere und hintere optische Anschlussfläche 82 bzw. 84 auf.

Der Faserabschnitt 72 ist nahezu vollständig in den Faserkanal 34 eingeführt und mittels der Rastnasen 52a-52d in diesem festgelegt. Hierbei greifen die Rastnasen 52a-52d quetschend im Wesentlichen lediglich in den Mantel 78 ein, wobei die vorderen Rastflächen 68a-68d den Faserabschnitt 72 insbesondere gegen ein rückwärtiges Verschieben sichern. Somit ist mittels der Rastnasen 52a-52d der Faserabschnitt 72 dauerhaft und sicher in dem Faserkanal 34 befestigt.

In Fig. 7 ist ferner zu sehen, dass die vordere optische Anschlussfläche 82 gegenüber dem rückseitigen Anschlag 38 etwas zurückgesetzt ist, um die MOST-Spezifikation zu erfüllen. Der Rücksatz oder Rückstand beträgt in diesem Beispiel 30 µm.

Darüber hinaus sind die Rastnasen oder Rasthaken 52a-52d gegenüber der Anschlagsfläche 38, welche mit der Vorderseite 39, der Faseraufnahmehülse 32 zusammenfällt, und gegenüber der vorderen optischen Anschlussfläche 82 zurückgesetzt. Der Rücksatz zur Vorderseite 39 der Faseraufnahmehülse 32 beträgt 1 mm.

Ferner ist der Innendurchmesser 86 des Führungsabschnittes 42 identisch mit dem Außendurchmesser des Faserabschnittes 72 gewählt, wodurch eine exakte Führung erzielt wird. Im Gegensatz dazu ist der Innendurchmesser 88 des Einführabschnittes 44 etwas größer als der Außendurchmesser des Faserabschnittes 72, so dass ein Spiel 90 im rückwärtigen Bereich des Faserabschnittes 72 von etwa 60 µm vorhanden ist.

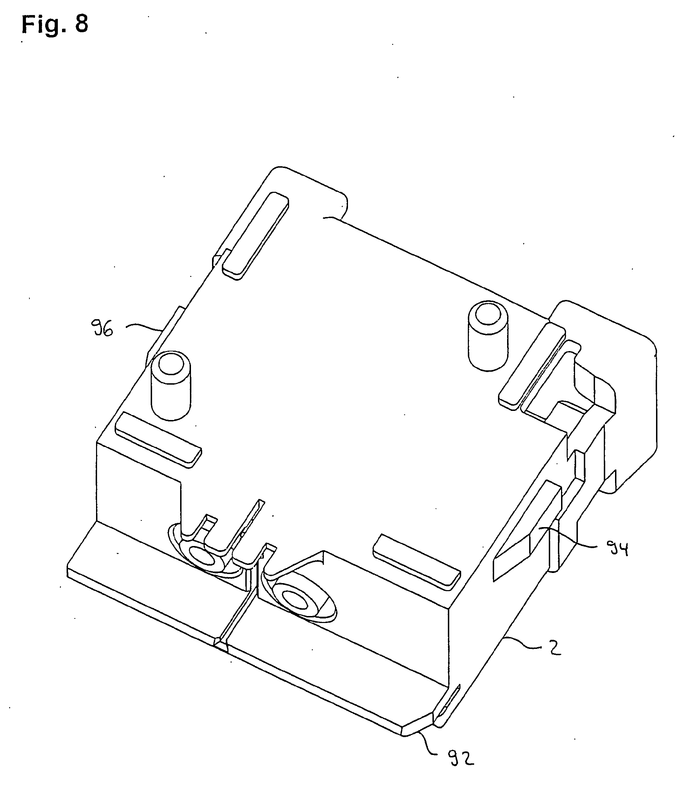

Bezug nehmend auf Fig. 8 ist das Verbindergehäuse 2 von schräg hinten unten mit einem rückwärtigen Deck- oder Stützabschnitt 92 und zwei seitlichen Rastvorsprüngen 94, 96 dargestellt.

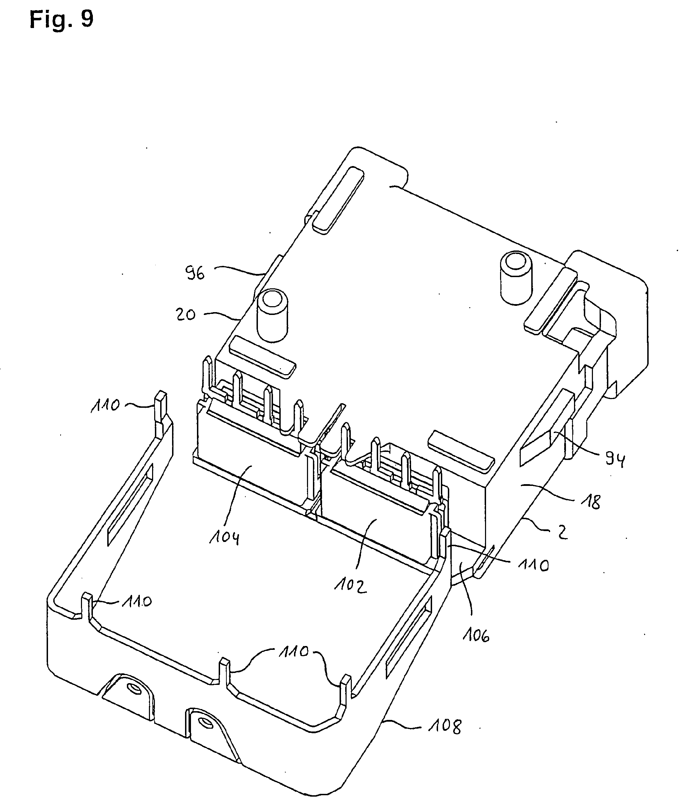

Fig. 9 zeigt das Verbindergehäuse 2 mit zwei rückseitig angebrachten elektro-optischen Wandlern 102, 104, welche an die jeweilige Führungshülse 32, 33 angeflanscht sind, um eine optische Verbindung mit den jeweiligen Faserabschnitten herzustellen. Die opto-elektronischen Wandler 102, 104 liegen mit ihrer Oberseite an der Unterseite 106 der Stützwand 92 an.

Eine im Wesentlichen U-förmgie Spannklammer 108 wird anschließend von hinten auf das Verbindergehäuse 2 aufgeschoben, um die Wandler 102, 104 festzuklemmen. Die Spannklammer 108 umfasst unterseitig eine Mehrzahl an integralen Lötstiften 110.

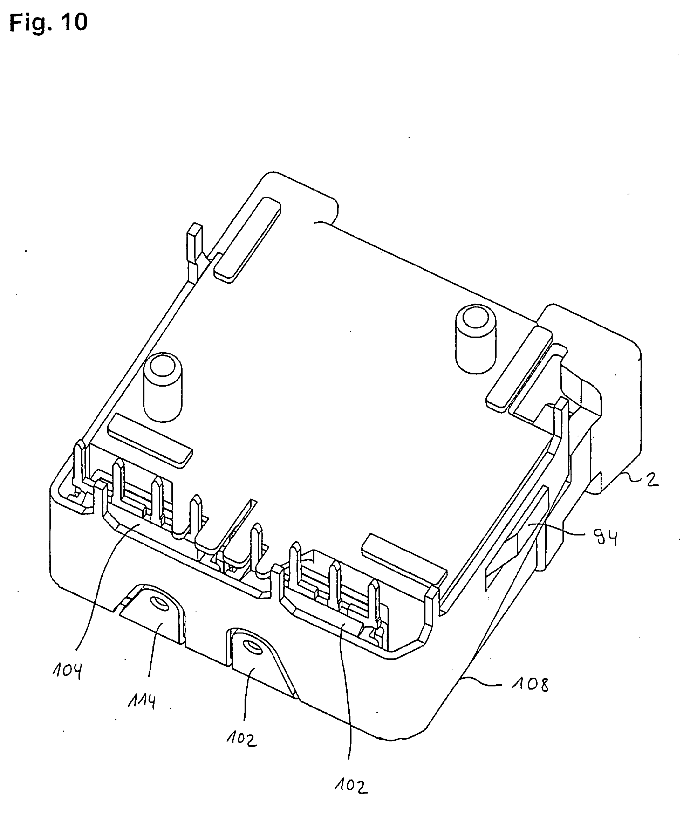

Bezug nehmend auf Fig. 10 ist die Spannklammer 108 in einem montierten Zustand dargestellt.

In diesem montierten Zustand werden die Wandler 102, 104 mittels elastisch federnden und an der Oberseite der Spannklammer 108 befestigten Federarmen 112 bzw. 114 in Vorwärtsrichtung kraftbeaufschlagt und damit vorgespannt.

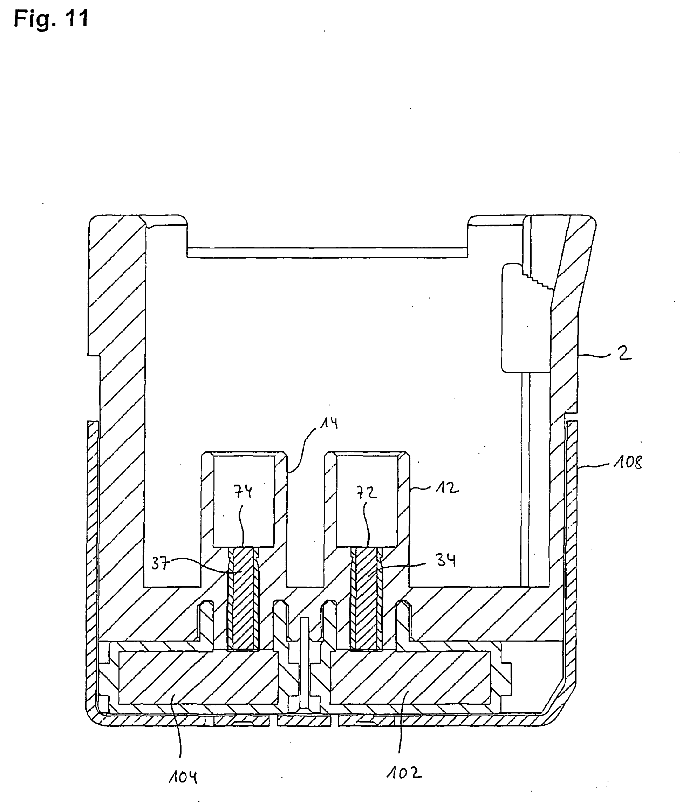

Fig. 11 verdeutlicht die optische Verbindung zwischen den in die Faserkanäle 34 und 37 eingepressten Faserabschnitten 72 bzw. 74 mit den zugehörigen Wandlern 102 bzw. 104.

## Patentansprüche

1. Optischer Verbinder (1) zum Herstellen einer Verbindung zwischen einem elektrooptischen Wandler (102, 104) des Verbinders (1) und zumindest einer optischen Faser eines komplementären Gegenverbinders, insbesondere zum Herstellen von Multimedia-Verbindungen in einem Kraftfahrzeug gemäß dem MOST-Standard, umfassend:
ein Verbindergehäuse (2) mit einer Gegenverbinderaufnahme (10) zum paarenden Verbinden mit dem Gegenverbinder,
zumindest einen optischen Faserabschnitt (72, 74) mit einer vorderen und hinteren optischen Anschlussfläche (82, 84),
zumindest ein Anschlusselement (12, 14) zum paarenden Verbinden mit einem komplementären Anschlusselement des Gegenverbinders,
wobei das Anschlusselement (12, 14) zumindest eine Faseraufnahmehülse (32, 33) aufweist, in welcher der optische Faserabschnitt (72, 74) angeordnet ist, um mit der vorderen optischen Anschlussfläche (82) eine optische Verbindung mit der optischen Faser des Gegenverbinders herzustellen,
wobei der optische Faserabschnitt (72, 74) mittels Klemmelementen (52a-52d) in der Faseraufnahmehülse (32, 33) festgelegt ist, **dadurch gekennzeichnet,**
**dass** die Klemmelemente (52a - 52d) longitudinal von der vorderen optischen Anschlussfläche (82) des optischen Faserabschnittes (72, 74) beabstandet sind, oder
**dass** die Faseraufnahmehülse (32, 33) im Bereich der vorderen optischen Anschlussfläche (82) des optischen Faserabschnitts (72, 74) eine Anschlagsfläche (38) für das komplementäre Anschlusselement des Gegenverbinders umfasst und die Klemmelemente (52a-52d) longitudinal von der Anschlagsfläche (38) der Faseraufnahmehülse (32, 33) beabstandet sind.

2. Verbinder (1) nach Anspruch 1,
**dadurch gekennzeichnet, dass**
die Faseraufnahmehülse (32, 33) einen im wesentlichen zylindrischen Faserkanal (34, 37) definiert, in welchem der optische Faserabschnitt (72, 74) festgelegt ist und die Klemmelemente (52a-52d) aus dem inneren Umfang (60) der Faseraufnahmehülse (32, 33) radial nach innen in den Faserkanal (34, 37) vorspringen.

3. Verbinder (1) nach einem der vorstehenden Ansprüche,
**dadurch gekennzeichnet, dass**
die Klemmelemente (52a-52d) einstückig mit der Faseraufnahmehülse (32, 33) ausgebildet sind.

4. Verbinder (1) nach einem der vorstehenden Ansprüche,
**dadurch gekennzeichnet, dass**
die Klemmelemente (52a-52d) in den äußeren Umfang des optischen Faserabschnitts (72, 74) materialverdrängend quetschend eingreifen.

5. Verbinder (1) nach einem der vorstehenden Ansprüche,
**dadurch gekennzeichnet, dass**
die Klemmelemente (52a-52d) eine der Anschlagsfläche (38) der Faseraufnahmehülse (32, 33) benachbarte Vorderseite (68a-68d) umfassen und die Vorderseite der Klemmelemente gegenüber der Anschlagsfläche (38) der Faseraufnahmehülse (32, 33) longitudinal zurückgesetzt sind.

6. Verbinder (1) nach einem der vorstehenden Ansprüche,
**dadurch gekennzeichnet, dass**
die Klemmelemente (52a-52d) in Bezug auf die Anschlagsfläche (38) der Faseraufnahmehülse (32, 33) um mehr als 0 µm und weniger als 5 mm zurückgesetzt sind.

7. Verbinder (1) nach einem der vorstehenden Ansprüche,
**dadurch gekennzeichnet, dass**
die Faseraufnahmehülse (32, 33) einen vorderen Führungsabschnitt (42) und einen hinteren Einführabschnitt (44) aufweist und der Innendurchmesser (88) des Einführabschnitts (44) größer als der Innendurchmesser (86) des Führungsabschnitts (42) ist.

8. Verbinder (1) nach Anspruch 7,
**dadurch gekennzeichnet, dass**
zwischen dem Führungsabschnitt (42) und dem Einführabschnitt (44) eine Fasung (46) vorgesehen ist.

9. Verbinder (1) nach einem der vorstehenden Ansprüche,
**dadurch gekennzeichnet, dass**
die Faseraufnahmehülse (32, 33) einen vorderen Führungsabschnitt (42) und einen hinteren Einführabschnitt (44) aufweist und der Führungsabschnitt (42) eine Führung für den Faserabschnitt (72, 74) definiert, deren Innendurchmesser (86) zwischen 40 µm kleiner und 120 µm größer als der Außendurchmesser des optischen Faserabschnitts (72, 74) beträgt.

10. Verbinder (1) nach einem der vorstehenden Ansprüche,
**dadurch gekennzeichnet, dass**
die Faseraufnahmehülse (32, 33) einen vorderen Führungsabschnitt (42) und einen hinteren Einführabschnitt (44) aufweist und der optische Faserabschnitt (72, 74) in dem Einführabschnitt (44) ein radiales Spiel (90) von 40 µm bis 100 µm aufweist.

11. Verbinder (1) nach einem der vorstehenden Ansprüche,
**dadurch gekennzeichnet, dass**
die Faseraufnahmehülse (32, 33) einen vorderen Führungsabschnitt (42) und einen hinteren Einführabschnitt (44) aufweist und die Klemmelemente (52a-52d) in dem Einführabschnitt (44) angeordnet sind.

12. Verbinder (1) nach einem der vorstehenden Ansprüche,
**dadurch gekennzeichnet, dass**
die Faseraufnahmehülse (32, 33) einen vorderen Führungsabschnitt (42) und einen hinteren Einführabschnitt (44) aufweist und sich die Klemmelemente (52a-52d) longitudinal von einem rückwärtigen Ende des Führungsabschnitts (42) bis in den Einführabschnitt (44) erstrecken.

13. Verbinder (1) nach einem der vorstehenden Ansprüche,
**dadurch gekennzeichnet, dass**
zumindest zwei, drei oder mehr Klemmelemente (52a-52d) an dem inneren Umfang (60) des Faserkanals (34, 37) angeordnet sind, welche in Bezug auf den Umfang (60) gleichmäßig verteilt sind.

14. Verbinder (1) nach einem der vorstehenden Ansprüche,
**dadurch gekennzeichnet, dass**
die Klemmelemente (52a-52d) in Form von Rastnasen ausgebildet sind.

15. Verbinder (1) nach Anspruch 14,
**dadurch gekennzeichnet, dass**
die Rastnasen (52a-52d) einen im Wesentlichen dreieckigen Querschnitt in radialer Richtung aufweisen.

16. Verbinder (1) nach Anspruch 14 oder 15,
**dadurch gekennzeichnet, dass** die Rastnasen (52a-52d)
eine geneigte rückseitige Rampenfläche (56a-56d) aufweisen, um den Faserabschnitt (72, 74) von der Rückseite des Verbindergehäuses (2) einzupressen und
eine vorderseitige Rastfläche (68a-68d) aufweisen, welche sich im Wesentlichen senkrecht zur optischen Achse (54) des Faserabschnitts (72, 74) erstreckt, um den Faserabschnitt zu verrasten.

17. Verbinder (1) nach einem der vorstehenden Ansprüche,
**dadurch gekennzeichnet, dass**
die Rastnasen (52a-52d) eine sich entlang des inneren Umfangs (60) der Faseraufnahmehülse (32, 33) erstreckende Breite von 150 µm bis 400 µm und eine sich radial nach innen erstreckende Höhe von 50 µm bis 200 µm aufweisen.

18. Verbinder (1) nach einem der vorstehenden Ansprüche,
**dadurch gekennzeichnet, dass**
der elektro-optische Wandler (102, 104) einen optischen Eingang/Ausgang aufweist, wobei der Wandler an einem rückseitigen Ende des Faserkanals angeordnet ist und über die hintere optische Anschlussfläche (84) des Faserabschnitts (72, 74) eine optische Verbindung zwischen dem Faserabschnitt und dem Wandler hergestellt ist.

19. Verbinder (1) nach Anspruch 18,
**dadurch gekennzeichnet, dass**
der elektro-optische Wandler (102, 104) mit einer Klammer (108) unmittelbar an einer Rückseite des Verbindergehäuses (2) befestigt ist.

20. Verbinder (1) nach Anspruch 19,
**dadurch gekennzeichnet, dass** die Klammer (108) aus Metall gestanzt, im Wesentlichen U-förmig ausgebildet und an den Seitenflächen (18, 20) des Verbindergehäuses (2) verrastet ist und Lötstifte (110) zum Verbinden mit einem Schaltungsträger aufweist.

21. Verbinder (1) nach einem der vorstehenden Ansprüche,
**dadurch gekennzeichnet, dass**
die Klammer (108) zumindest einen elastisch federnden Abschnitt (112, 114) aufweist, welcher in einem montierten Zustand den Wandler (102, 104) vorwärts in Richtung der hinteren optischen Anschlussfläche (84) des Faserabschnitts (72, 74) presst.

22. Verbinder (1) nach einem der vorstehenden Ansprüche,
**dadurch gekennzeichnet, dass**
die Klammer (108) eine Rückwand und einen oberseitigen Deckabschnitt aufweist, welche entlang einer hinteren oberen Kante einstückig miteinander verbunden sind, wobei der elastisch federnde Abschnitt (112, 114) an dem oberseitigen Deckabschnitt aufgehängt ist und der elastisch federnde Abschnitt einen im Wesentlichen L-förmig gebogenen Querschnitt aufweist.

23. Verfahren zum Herstellen eines optischen Verbinders (1) zum Herstellen einer Verbindung zwischen einem elektro-optischen Wandler (102, 104) des Verbinders und zumindest einer optischen Faser eines komplementären Gegenverbinders, insbesondere zum Herstellen eines Multimedia-Verbinders für ein Kraftfahrzeug gemäß dem MOST-Standard, nach einem der vorstehenden Ansprüche, umfassend die Schritte:
Bereitstellen eines Verbindergehäuses (2) mit einer Gegenverbinderaufnahme zum paarenden Verbinden mit dem Gegenverbinder, wobei der Verbinder (1) zumindest zwei Anschlusselemente (12, 14) zum paarenden Verbinden mit jeweils einem komplementären Anschlusselement des Gegenverbinders aufweist und wobei die Anschlusselemente (12, 14) jeweils eine Faseraufnahmehülse (32, 33) jeweils mit einer Mehrzahl von innenseitigen Klemmelementen (52a-52d) aufweist,
Bereitstellen zumindest zweier optischer Faserabschnitte (72, 74) mit jeweils einer vorderen und hinteren optischen Anschlussfläche (82, 84),
nachfolgend Einpressen der Faserabschnitte (72, 74) unmittelbar in die jeweils zugehörige Faseraufnahmehülse (32, 33), wobei die Faserabschnitte (72, 74) mittels der Klemmelemente (52a-52d) in den Faseraufnahmehülsen (32, 33) festgelegt werden, derart, dass über die vorderen optischen Anschlussflächen (82) der optischen Faserabschnitte (72, 74) eine optische Verbindung mit jeweils einer optischen Faser des Gegenverbinders herstellbar ist, wenn der Verbinder (1) mit dem Gegenverbinder gepaart wird,
nachfolgend Anordnen zweier elektro-optischer Wandler (102, 104) an einer Rückseite (48) der jeweils zugehörigen Faseraufnahmehülse (32, 33) derart, dass über die hinteren optischen Anschlussflächen (84) der Faserabschnitte (72, 74) eine optische Verbindung zwischen den Faserabschnitten (72, 74) und den Wandlern (102, 104) hergestellt wird, und
Befestigen der Wandler (102, 104) an dem Verbinder (1),
wobei die Faserabschnitte (72, 74) beim Einpressen mit ihren vorderen optischen Anschlussflächen (82) über die Klemmelemente (52a-52d) hinaus in die zugehörige Faseraufnahmehülse (32, 33) eingeschoben werden.

24. Verfahren nach Anspruch 23,
**dadurch gekennzeichnet, dass**
die Faseraufnahmehülsen (32, 33) im Bereich der vorderen optischen Anschlussflächen (82) der optischen Faserabschnitte (72, 74) jeweils eine vordere Anschlagsfläche (38) umfassen und jeweils ein Montagestempel gegen die vorderen Anschlagsflächen (38) gedrückt wird, um beim Einpressen einen vorderen Anschlag für den jeweils optischen Faserabschnitt (72, 74) zu bilden.

## Claims

1. Optical connector (1) for establishing a connection between an electro-optical transducer (102, 104) of the connector (1) and at least one optical fibre of a complementary mating connector, in particular for establishing multimedia connections in a motor vehicle in accordance with the MOST standard, including:
a connector housing (2) having a mating connector receptacle (10) for the mating connection with the mating connector.
at least one optical fibre section (72, 74) having a front and rear optical contact surface (82, 84),
at least one contact element (12, 14) for the mating connection with a complementary contact element of the mating connector,
wherein the contact element (12, 14) comprises at least one fibre receiving sleeve (32, 33) in which the optical fibre section (72, 74) is disposed in order to establish, with the front optical contact surface (82), an optical connection with the optical fibre of the mating connector,
wherein the optical fibre section (72, 74) is fixed in the fibre receiving sleeve (32, 33) by means of clamping elements (52a-52d),
**characterised in that** the clamping elements (52a-52d) are longitudinally spaced apart from the front optical contact surface (82) of the optical fibre section (72, 74), or
**in that** the fibre receiving sleeve (32, 33) includes, in the region of the front optical contact surface (82) of the optical fibre section (72, 74), a stop surface (38) for the complementary contact element of the mating connector and the clamping elements (52a-52d) are longitudinally spaced apart from the stop surface (38) of the fibre receiving sleeve (32, 33).

2. Connector (1) as claimed in Claim 1, **characterised in that**
the fibre receiving sleeve (32, 33) defines a substantially cylindrical fibre channel (34, 37) in which the optical fibre section (72, 74) is fixed and the clamping elements (52a-52d) protrude from the inner periphery (60) of the fibre receiving sleeve (32, 33) radially inwardly into the fibre channel (34, 37).

3. Connector (1) as claimed in any one of the preceding Claims, **characterised in that**
the clamping elements (52a-52d) are formed in one piece with the fibre receiving sleeve (32, 33).

4. Connector (1) as claimed in any one of the preceding Claims, **characterised in that**
the clamping elements (52a-52d) engage into the outer periphery of the optical fibre section (72, 74) in a material-displacing, compressing manner.

5. Connector (1) as claimed in any one of the preceding Claims, **characterised in that**
the clamping elements (52a-52d) include a front side (68a-68d) adjacent to the stop surface (38) of the fibre receiving sleeve (32, 33), and the front sides of the clamping elements are longitudinally set back with respect to the stop surface (38) of the fibre receiving sleeve (32, 33).

6. Connector (1) as claimed in any one of the preceding Claims, **characterised in that**
the clamping elements (52a-52d) are set back in relation to the stop surface (38) of the fibre receiving sleeve (32, 33) by more than 0 µm and less than 5 mm.

7. Connector (1) as claimed in any one of the preceding Claims, **characterised in that**
the fibre receiving sleeve (32, 33) comprises a front guide section (42) and a rear insertion section (44) and the inner diameter (88) of the insertion section (44) is greater than the inner diameter (86) of the guide section (42).

8. Connector (1) as claimed in Claim 7, **characterised in that**
a chamfer (46) is provided between the guide section (42) and the insertion section (44).

9. Connector (1) as claimed in any one of the preceding Claims, **characterised in that**
the fibre receiving sleeve (32, 33) comprises a front guide section (42) and a rear insertion section (44) and the guide section (42) defines a guide for the fibre section (72, 74) whose inner diameter (86) is between 40 µm smaller and 120 µm greater than the outer diameter of the optical fibre section (72, 74).

10. Connector (1) as claimed in any one of the preceding Claims, **characterised in that**
the fibre receiving sleeve (32, 33) comprises a front guide section (42) and a rear insertion section (44) and the optical fibre section (72, 74) has, in the insertion section (44), a radial clearance (90) of 40 µm to 100 µm.

11. Connector (1) as claimed in any one of the preceding Claims, **characterised in that**
the fibre receiving sleeve (32, 33) comprises a front guide section (42) and a rear insertion section (44) and the clamping elements (52a-52d) are disposed in the insertion section (44).

12. Connector (1) as claimed in any one of the preceding Claims, **characterised in that**
the fibre receiving sleeve (32, 33) comprises a front guide section (42) and a rear insertion section (44) and the clamping elements (52a-52d) extend longitudinally from a rearward end of the guide section (42) into the insertion section (44).

13. Connector (1) as claimed in any one of the preceding Claims, **characterised in that**
at least two, three or more clamping elements (52a-52d) are disposed on the inner periphery (60) of the fibre cannel (34, 37) and are evenly distributed in relation to the periphery (60).

14. Connector (1) as claimed in any one of the preceding Claims, **characterised in that**
the clamping elements (52a-52d) are formed as latching lugs.

15. Connector (1) as claimed in Claim 14, **characterised in that**
the latching lugs (52a-52d) have a substantially triangular cross-section in the radial direction.

16. Connector (1) as claimed in Claim 14 or 15, **characterised in that** the latching lugs (52a-52d)
comprise an inclined, rear-side ramp surface (56a-56d) in order to press in the fibre section (72, 74) from the rear side of the connector housing (2) and comprise a front-side latching surface (68a-68d) which extends substantially perpendicularly with respect to the optical axis (54) of the fibre section (72, 74) in order to latch the fibre section.

17. Connector (1) as claimed in any one of the preceding Claims, **characterised in that**
the latching lugs (52a-52d) have a width - extending along the inner periphery (60) of the fibre receiving sleeve (32, 33) - of 150 µm to 400 µm and a height - extending radially inwardly - of 50 µm to 200 µm.

18. Connector (1) as claimed in any one of the preceding Claims, **characterised in that**
the electro-optical transducer (102, 104) comprises an optical input/output, wherein the transducer is disposed on a rear-side end of the fibre channel and an optical connection is established between the fibre section and the transducer via the rear, optical contact surface (84) of the fibre section (72, 74).

19. Connector (1) as claimed in Claim 18, **characterised in that**
the electro-optical transducer (102, 104) is directly attached to a rear side of the connector housing (2) by means of a clip (108).

20. Connector (1) as claimed in Claim 19, **characterised in that**
the clip (108) is stamped from metal, is formed in a substantially U-shaped manner, is latched to the lateral surfaces (18, 20) of the connector housing (2) and comprises soldering pins (110) for connection with an interconnect device.

21. Connector (1) as claimed in any one of the preceding Claims, **characterised in that**
the clip (108) comprises at least one elastically resilient section (112, 114) which, when assembled, presses the transducer (102, 104) forwardly in the direction of the rear, optical contact surface (84) of the fibre section (72, 74).

22. Connector (1) as claimed in any one of the preceding Claims, **characterised in that**
the clip (108) comprises a rear wall and an upper cover section which are connected to each other as one piece along a rear upper edge, wherein the elastically resilient section (112, 114) is suspended on the upper cover section and the elastically resilient section has a cross-section which is bent so as to be substantially L-shaped.

23. Method for producing an optical connector (1) for establishing a connection between an electro-optical transducer (102, 104) of the connector and at least one optical fibre of a complementary mating connector, in particular for producing a multimedia connector for a motor vehicle in accordance with the MOST standard, as claimed in any one of the preceding Claims, including the steps of:
providing a connector housing (2) having a mating connector receptacle for the mating connection with the mating connector, wherein the connector (1) comprises at least two contact elements (12. 14) for the mating connection with a respective complementary contact element of the mating connector, and wherein the contact elements (12, 14) in each case comprise a fibre receiving sleeve (32, 33) having in each case a plurality of inner clamping elements (52a-52d), providing at least two optical fibre sections (72, 74) having in each case a front and rear optical contact surface (82, 84),
subsequently pressing the fibre sections (72, 74) directly into the respectively associated fibre receiving sleeve (32, 33), wherein the fibre sections (72. 74) are fixed in the fibre receiving sleeves (32, 33) by means of the clamping elements (52a-52d), such that an optical connection can be established with in each case one optical fibre of the mating connector via the front optical contact surfaces (82) of the optical fibre sections (72, 74) when the connector (1) is mated with the mating connector,
subsequently disposing two electro-optical transducers (102, 104) on a rear side (48) of the respectively associated fibre receiving sleeve (32, 33) such that an optical connection is established between the fibre sections (72, 74) and the transducers (102, 104) via the rear optical contact surfaces (84) of the fibre sections (72, 74), and
attaching the transducers (102, 104) to the connectors (1), wherein upon being pressed-in the fibre sections (72, 74) are slid into the associated fibre receiving sleeve (32, 33) with their front optical contact surfaces (82) beyond the clamping elements (52a-52d).

24. Method as claimed in Claim 23, **characterized in that** the fibre receiving sleeves (32, 33) each include a front stop surface (38) in the region of the front optical contact surfaces (82) of the optical fibre sections (72, 74) and in each case a mounting die is pressed against the front stop surfaces (38) in order to form a front stop for each optical fibre section (72, 74) when being pressed-in.

## Revendications

1. Connecteur (1) optique pour l'établissement d'une liaison entre un convertisseur (102, 104) électro-optique du connecteur (1) et au moins une fibre optique d'un contre-connecteur complémentaire, en particulier pour l'établissement de liaisons multimédia sur un véhicule automobile selon le standard MOST, comprenant :
un boîtier de connecteur (2) avec un logement de contre-connecteur (10) pour la liaison d'appariement avec le contre-connecteur,
au moins une partie de fibre optique (72, 74) avec des surfaces de raccordement (82, 84) optiques avant et arrière,
au moins un élément de raccordement (12, 14) pour la liaison d'appariement avec un élément de raccordement complémentaire du contre-connecteur,
l'élément de raccordement (12, 14) présentant au moins une douille de logement de fibre (32, 33), dans laquelle la partie de fibre optique (72, 74) est disposée, afin d'établir avec la surface de raccordement (82) optique avant, une liaison optique avec la fibre optique du contre-connecteur,
la partie de fibre optique (72, 74) étant fixée au moyen d'éléments de serrage (52a-52d) dans la douille de logement de fibre (32, 33),
**caractérisé en ce que** les éléments de serrage (52a-52d) sont espacés dans le sens longitudinal de la surface de raccordement (82) optique avant de la partie de fibre optique (72, 74), ou
**en ce que** la douille de logement de fibre (32, 33) comprend dans la zone de la surface de raccordement (82) optique avant de la partie de fibre optique (72, 74) une surface de butée (38) pour l'élément de raccordement complémentaire du contre-connecteur et les éléments de serrage (52a-52d) sont espacés dans le sens longitudinal de la surface de butée (38) de la douille de logement de fibre (32, 33).

2. Connecteur (1) selon la revendication 1,
**caractérisé en ce que**,
la douille de logement de fibre (32, 33) définit un canal de fibre (34, 37) sensiblement cylindrique, dans lequel la partie de fibre optique (72, 74) est fixée et les éléments de serrage (52a-52d) dépassent du pourtour (60) intérieur de la douille de logement de fibre (32, 33) radialement vers l'intérieur dans le canal de fibre (34, 37).

3. Connecteur (1) selon l'une quelconque des revendications précédentes,
**caractérisé en ce que**
les éléments de serrage (52a-52d) sont conçus d'un seul tenant avec la douille de logement de fibre (32, 33).

4. Connecteur (1) selon l'une quelconque des revendications précédentes,
**caractérisé en ce que**
les éléments de serrage (52a-52d) s'engagent dans le pourtour extérieur de la partie de fibre optique (72, 74) en refoulant et en écrasant le matériau.

5. Connecteur (1) selon l'une quelconque des revendications précédentes,
**caractérisé en ce que**
les éléments de serrage (52a-52d) comprennent un côté avant (68a-68d) voisin de la surface de butée (38) de la douille de logement de fibre (32, 33), et le côté avant des éléments de serrage est décalé en arrière dans le sens longitudinal par rapport à la surface de butée (38) de la douille de logement de fibre (32, 33).

6. Connecteur (1) selon l'une quelconque des revendications précédentes,
**caractérisé en ce que**
les éléments de serrage (52a-52d) sont décalés en arrière de plus de 0 µm et de moins de 5 µm par rapport à la surface de butée (38) de la douille de logement de fibre (32, 33).

7. Connecteur (1) selon l'une quelconque des revendications précédentes,
**caractérisé en ce que**
la douille de logement de fibre (32, 33) présente une partie de guidage (42) avant et une partie d'introduction (44) arrière et le diamètre intérieur (88) de la partie d'introduction (44) est plus grand que le diamètre intérieur (86) de la partie de guidage (42).

8. Connecteur (1) selon la revendication 7, **caractérisé en ce**
**qu'**un chanfrein (46) est prévu entre la partie de guidage (42) et la partie d'introduction (44).

9. Connecteur (1) selon l'une quelconque des revendications précédentes,
**caractérisé en ce que**
la douille de logement de fibre (32, 33) présente une partie de guidage (42) avant et une partie d'introduction (44) arrière et la partie de guidage (42) définit un guidage pour la partie de fibre (72, 74), dont le diamètre intérieur (86) se situe entre 40 µm de moins et 120 µm de plus que le diamètre extérieur de la partie de fibre optique (72, 74).

10. Connecteur (1) selon l'une quelconque des revendications précédentes,
**caractérisé en ce que**
la douille de logement de fibre (32, 33) présente une partie de guidage avant (42) et une partie d'introduction (44) arrière et la partie de fibre (72, 74) optique présente dans la partie d'introduction (44) un jeu radial (90) allant de 40 µm à 100 µm.

11. Connecteur (1) selon l'une quelconque des revendications précédentes,
**caractérisé en ce que**
la douille de logement de fibre (32, 33) présente une partie de guidage (42) avant et une partie d'introduction (44) arrière et les éléments de serrage (52a-52d) sont disposés dans la partie d'introduction (44).

12. Connecteur (1) selon l'une quelconque des revendications précédentes,
**caractérisé en ce que**
la douille de logement de fibre (32, 33) présente une partie de guidage (42) avant et une partie d'introduction (44) arrière et les éléments de serrage (52a-52d) s'étendent dans le sens longitudinal depuis une extrémité arrière de la partie de guidage (42) jusque dans la partie d'introduction (44).

13. Connecteur (1) selon l'une quelconque des revendications précédentes,
**caractérisé en ce que**
au moins deux, trois ou plus de trois éléments de serrage (52a-52d) sont disposés sur le pourtour (60) intérieur du canal de fibre (34, 37), qui sont répartis uniformément par rapport au pourtour (60).

14. Connecteur (1) selon l'une quelconque des revendications précédentes,
**caractérisé en ce que**
les éléments de serrage (52a-52d) sont conçus sous la forme d'ergots d'encliquetage.

15. Connecteur (1) selon la revendication 14,
**caractérisé en ce que**
les ergots d'encliquetage (52a-52d) présentent une section sensiblement triangulaire dans le sens radial.

16. Connecteur (1) selon la revendication 14 ou 15,
**caractérisé en ce que** les ergots d'encliquetage (52a-52d)
présentent une surface de rampe (56a-56d) côté arrière inclinée, afin d'enfoncer la partie de fibre (72, 74) à partir de l'arrière du boîtier de connecteur (2) et
présentent une surface d'encliquetage (68a-68d) côté avant, qui s'étend sensiblement perpendiculairement à l'axe (54) optique de la partie de fibre (72, 74), afin d'encliqueter la partie de fibre.

17. Connecteur (1) selon l'une quelconque des revendications précédentes,
**caractérisé en ce que**
les ergots d'encliquetage (52a-52d) présentent une largeur, s'étendant le long du pourtour (60) intérieur de la douille de logement de fibre (32, 33) de 150 µm à 400 µm et une hauteur, s'étendant radialement vers l'intérieur, de 50 µm à 200 µm.

18. Connecteur (1) selon l'une quelconque des revendications précédentes,
**caractérisé en ce que**
le convertisseur (102, 104) électro-optique présente une entrée/sortie optique, le convertisseur étant disposé sur une extrémité côté arrière du canal de fibre et une liaison optique entre la partie de fibre et le convertisseur étant établie au moyen de la surface de raccordement (84) optique arrière de la partie de fibre (72, 74).

19. Connecteur (1) selon la revendication 18,
**caractérisé en ce que**
le convertisseur (102, 104) électro-optique est fixé par une pince (108) directement sur un côté arrière du boîtier de connecteur (2).

20. Connecteur (1) selon la revendication 19,
**caractérisé en ce que**
la pince (108) est découpée dans du métal, conçue sensiblement en forme de U, et est encliquetée sur les surfaces latérales (18, 20) du boîtier de connecteur (2) et présente des plots à souder (110) pour la liaison avec un support de circuit.

21. Connecteur (1) selon l'une quelconque des revendications précédentes,
**caractérisé en ce que** la pince (108) présente au moins une partie (112, 114) montée en faisant ressort, qui, dans un état monté, comprime le convertisseur (102, 104) en avant en direction de la surface de raccordement (84) optique arrière de la partie de fibre optique (72, 74).

22. Connecteur (1) selon l'une quelconque des revendications précédentes,
**caractérisé en ce que**
la pince (108) présente une paroi arrière et une partie de recouvrement côté supérieur, qui sont reliées d'un seul tenant l'une à l'autre le long d'une arête supérieure arrière, la partie (112, 114) montée en faisant ressort étant suspendue sur la partie de recouvrement côté supérieur et la partie montée en faisant ressort présentant une section pliée sensiblement en forme de L.

23. Procédé pour fabriquer un connecteur (1) optique pour l'établissement d'une liaison entre un convertisseur (102, 104) électro-optique du connecteur et au moins une fibre optique d'un contre-connecteur complémentaire, en particulier pour l'établissement d'un connecteur multimédia pour un véhicule automobile selon le standard MOST, selon l'une quelconque de revendications précédentes, comprenant les étapes suivantes :
mise à disposition d'un boîtier de connecteur (2) avec un logement de contre-connecteur pour la liaison d'appariement avec le contre-connecteur, le connecteur (1) présentant au moins deux éléments de raccordement (12, 14) pour la liaison d'appariement avec respectivement un élément de raccordement complémentaire du contre-connecteur et les éléments de raccordement (12, 14) présentant chacun une douille de logement de fibre (32, 33) respectivement avec une pluralité d'éléments de serrage (52a-52d) côté intérieur,
mise à disposition d'au moins deux parties de fibre (72, 74) optique présentant chacune une surface de raccordement optique avant et une surface de raccordement optique arrière (82, 84),
ensuite enfoncement des parties de fibre (72, 74) directement dans la douille de logement de fibre (32, 33) respectivement spécifique, les parties de fibre (72, 74) étant fixées au moyen des éléments de serrage (52a-52d) dans les douilles de logement de fibre (32, 33), de telle sorte qu'une liaison optique avec respectivement une fibre optique du contre-connecteur peut être établie au moyen des surfaces de raccordement (82) optiques avant des parties de fibre optique (72, 74) lorsque le connecteur (1) est apparié avec le contre-connecteur,
ensuite agencement de deux convertisseurs (102, 104) électro-optiques sur une face arrière (48) de la douille de logement de fibre (32, 33) respectivement spécifique, de telle sorte qu'une liaison optique entre les parties de fibre (72, 74) et les convertisseurs (102, 104) est établie au moyen des surfaces de raccordement (84) optiques arrière des parties de fibre (72, 74), et
fixation des convertisseurs (102, 104) sur le connecteur (1),
les parties de fibre (72, 74) étant introduites lors de l'enfoncement avec leurs surfaces de raccordement (82) optiques avant au-delà des éléments de serrage (52a-52d) dans la douille de logement de fibre (32, 33) spécifique.

24. Procédé selon la revendication 23,
**caractérisé en ce que**
les douilles de logement de fibre (32, 33) comprennent à chaque fois une surface de butée (38) avant dans la zone des surfaces de raccordement (82) optiques avant des parties de fibre (72, 74) optique et un poinçon de montage est appuyé à chaque fois contre les surfaces de butée (38) avant, afin de former lors de l'enfoncement une butée avant pour la partie de fibre (72, 74) optique respective.
